(19) **Europäisches Patentamt**
**European Patent Office**
**Office européen des brevets**

(11) **EP 4 567 656 B1**

(12) # EUROPEAN PATENT SPECIFICATION

(45) Date of publication and mention
of the grant of the patent:
**14.01.2026 Bulletin 2026/03**

(51) International Patent Classification (IPC):
**G06F 30/23** *(2020.01)* **G06F 30/28** *(2020.01)*

(21) Application number: **24217320.1**

(22) Date of filing: **04.12.2024**

(52) Cooperative Patent Classification (CPC):
**G06F 30/23; G06F 30/28; H01M 10/625;**
**H01M 10/633;** G06F 2111/10; H01M 2220/20;
Y02E 60/10

(54) **METHOD AND SYSTEM FOR COMPUTING TEMPERATURE PARAMETERS IN REDUCED-ORDER TRANSIENT CONJUGATE HEAT TRANSFER SYSTEM**

VERFAHREN UND SYSTEM ZUR BERECHNUNG VON TEMPERATURPARAMETERN IN EINEM TRANSIENTEN KONJUGIERTEN WÄRMEÜBERTRAGUNGSSYSTEM REDUZIERTER ORDNUNG

PROCÉDÉ ET SYSTÈME DE CALCUL DE PARAMÈTRES DE TEMPÉRATURE DANS UN SYSTÈME DE TRANSFERT DE CHALEUR CONJUGUÉ TRANSITOIRE D'ORDRE RÉDUIT

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**

(30) Priority: **06.12.2023 IN 202321083211**

(43) Date of publication of application:
**11.06.2025 Bulletin 2025/24**

(73) Proprietor: **Tata Consultancy Services Limited**
**Maharashtra (IN)**

(72) Inventors:
• **VUPPULA, VIJAY KUMAR REDDY**
**411057 Pune, Maharashtra (IN)**
• **RAMANUJAM, MURALIKRISHNAN**
**411057 Pune, Maharashtra (IN)**
• **RUNKANA, VENKATARAMANA**
**411013 Pune, Maharashtra (IN)**

(74) Representative: **Goddar, Heinz J.**
**Boehmert & Boehmert**
**Anwaltspartnerschaft mbB**
**Pettenkoferstrasse 22**
**80336 München (DE)**

(56) References cited:
• **GERMAN P◆TER ET AL: "GeN-ROM-An OpenFOAM -based multiphysics reduced-order modeling framework for the analysis of Molten Salt Reactors", PROGRESS IN NUCLEAR ENERGY, PERGAMON PRESS, OXFORD, GB, vol. 146, 25 February 2022 (2022-02-25), XP087001611, ISSN: 0149-1970, [retrieved on 20220225], DOI: 10.1016/ J.PNUCENE.2022.104148**
• **XIANG LINYAN ET AL: "Efficient reduced order model for heat transfer in a battery pack of an electric vehicle", vol. 201, 29 October 2021 (2021-10-29), GB, pages 117641, XP093255849, ISSN: 1359-4311, Retrieved from the Internet <URL:https://pdf.sciencedirectassets.com/ 271641/1-s2.0-S1359431121X00166/ 1-s2.0-S135943112101067X/main.pdf? hash=eb82417f19dc04725903ad50ce62cb7f66e2 f5185785533a99ffeca5bebb471a&host=68042 c943591013ac2b2430a89b270f6af2c76d8dfd086 a07176afe7c76c2c61&pii=S135943112101067X& tid=spdf-6123341c-6bc5-411b-b495-4a9> [retrieved on 20250305], DOI: 10.1016/ j.applthermaleng.2021.117641**
• **SOKRATIA GEORGAKA ET AL: "Parametric POD-Galerkin Model Order Reduction for Unsteady-State Heat Transfer Problems", ARXIV.ORG, CORNELL UNIVERSITY LIBRARY, 201 OLIN LIBRARY CORNELL UNIVERSITY ITHACA, NY 14853, 15 August 2018 (2018-08-15), XP081016251**

EP 4 567 656 B1

**Description**

CROSS-REFERENCE TO RELATED APPLICATIONS AND PRIORITY

The present application claims priority from Indian application No. 202321083211, filed on December 6, 2023.

TECHNICAL FIELD

The disclosure herein generally relates to the field of battery management and, more particularly, to a method and system for computing temperature parameters in reduced-order transient conjugate heat transfer system.

BACKGROUND

Conjugate heat transfer is a type of heat transfer analysis between solids and fluid(s). Heat transfer in batteries of electric vehicles is an example of conjugate heat transfer, where heat dissipation in solid battery is transferred to fluids surrounding the solid battery/battery. To maintain a healthy and safe battery, a Battery Management System (BMS) is used for measuring the battery status and safety. BMS require numerous sensors for estimating the battery status and safety which is a costly process. Hence real time models like digital twins are used for predicting battery parameters thereby ensuring status and safety/health of batteries.

Conventional high-fidelity models like computational fluid dynamics (CFD) are widely being used to model parameters of various systems as they are physics-based and accurate. However, CFD is not a feasible option for digital twinning because they are computationally expensive and require large amounts of memory. Also, CFD does not provide real time predictions as needed in digital twins for prediction and optimization. Another conventional approach is to use heat transfer modeling which utilizes available empirical correlations and work well for well-defined flow paths like in a rectangular or circular coolant channels. However, immersion cooling applications where the battery stack is cooled with a dielectric coolant fluid has complex flow patterns that are challenging to be modeled as a digital twin without high fidelity modeling. Hence there is a need to transfer information from CFD to reduced order models so that it will be compatible for digital twinning and to obtain faster and fairly accurate results.

Yet another conventional approach is to use Machine Learning (ML) models and the ML models work well in interpolation of operating conditions over which the models are trained but their performance degrades drastically in extrapolation of operating conditions. Furthermore, certain machine learning models are sensitive to change in boundary conditions of the system, that means their performance is poor when the boundary conditions of the system are different from that of boundary conditions of the data used to train the model. Similar problems exist with the empirical models. Hence, there is a need for an accurate and faster method for computing parameters in conjugate heat transfer systems. GERMAN PETER ET AL presents a projection-based multi physics Model Order Reduction (MOR) framework for the analysis of nuclear systems and its application to parametric simulations of Molten Salt Reactors (MSR). The framework, named GeN-ROM, is developed using OpenFOAM® and employs a Proper Orthogonal Decomposition aided Reduced-Basis technique (POD-RB). It can be used to reduce steady-state and transient multiphysics problems involving parametric fluid dynamics, heat exchange, and neutronics phenomena. For the treatment of structural elements in the hydraulic systems, a porous medium approach has been adopted. The reduction process is data-driven and snapshot information is extracted via POD to learn the solution manifold and to build global spatial basis functions. At the data collection phase, GeN-ROM makes use of the solvers available in GeNFoam, a similarly OpenFOAM®-based multi physics framework developed for the analysis of nuclear reactors. The global bases are used both to approximate the solution fields and to project the full-order equations onto lower-dimensional subspaces, thus considerably reducing the number of unknowns in a numerical system. This reduction leads to significant computational speedups, which is ideal for multi-query applications such as uncertainty quantification or design optimization. The developed tool has been tested using a 2D multi physics model of the Molten Salt Fast Reactor (MSFR) with steady-state and transient scenarios, with speedups on the order of 10- 10°.

SUMMARY

Embodiments of the present disclosure present technological improvements as solutions to one or more of the above-mentioned technical problems recognized by the inventors in conventional systems. The invention is set out in appended set of claims.

It is to be understood that both the foregoing general description and the following detailed description are exemplary and explanatory only and are not restrictive of the invention, as claimed.

BRIEF DESCRIPTION OF THE DRAWINGS

The accompanying drawings, which are incorporated in and constitute a part of this disclosure, illustrate exemplary embodiments and, together with the description, serve to explain the disclosed principles:

FIG. 1A is a functional block diagram of a system for computing temperature parameters in reduced-order transient conjugate heat transfer system, in accordance with some embodiments of the present disclosure.
FIG. 1B is a broad level process flow of system of FIG. 1A and can be understood with reference to method of FIG. 3.
FIG. 2 illustrates an example heat transfer system, in accordance with some embodiments of the present disclosure.
FIG. 3 (FIG. 3A and FIG. 3B) illustrates a flow diagram for a processor implemented method for computing temperature parameters in reduced-order transient conjugate heat transfer system, in accordance with some embodiments of the present disclosure.
FIG. 4 illustrates an example Root Mean Squared (RMS) Error plot between Reduced-order model and Full Order Model (FOM) model for the processor implemented method for computing temperature parameters in reduced-order transient conjugate heat transfer system, in accordance with some embodiments of the present disclosure.

DETAILED DESCRIPTION OF EMBODIMENTS

Exemplary embodiments are described with reference to the accompanying drawings. In the figures, the left-most digit(s) of a reference number identifies the figure in which the reference number first appears. Wherever convenient, the same reference numbers are used throughout the drawings to refer to the same or like parts. While examples and features of disclosed principles are described herein, modifications, adaptations, and other implementations are possible without departing from the scope of the disclosed embodiments.

Electric Vehicles (EV) and Hybrid Electric Vehicles (HEV) are getting importance due to the pollution caused by fossil fuel vehicles and the need for clean energy sources. The battery pack in the EVs forms an important part (for example, approximately 40% of the cost of the vehicles). A battery management system (BMS) performs the basic tasks of charging the battery pack in the vehicle and monitoring the important functions in the battery like current, voltage and temperature so that the battery does not catch fire (thermal runaway), under charge or degrade soon.

With battery systems getting more common it is important to augment the capabilities of the BMS system by enhancing the life and the energy density in the battery. Current, voltage and temperature recorded in the battery pack could be used to understand more about the behavior of the battery and optimize the use of the pack to enhance energy efficiency there by decreasing the overall running costs and battery recycling costs.

Digital twin is an efficient way to model the behavior of a real battery pack in a virtual environment and use the insights gained from the twin to optimize and predict future trends. A typical digital twin inside an electric vehicle consists of modules to predict State of Charge (SoC) and State of Health (SoH) of the battery stack. The SoH and SoC of a battery have a strong dependence on its temperature and it is essential to compute temperature parameters in an accurate manner. The ideal operating range for the battery pack is between 25 C to 35 C. At higher temperatures above that limit, the capacity of the battery degrades faster and reduces the life of the battery.

To maintain a healthy and safe battery, the BMS require numerous sensors for estimating parameters associated with the battery status and safety, which is a costly process. Hence real time models like digital twins are used for predicting battery parameters thereby ensuring status and safety of batteries. Conventional heat transfer modeling using available empirical correlations work well for well-defined flow paths like in a rectangular or circular coolant channels. However, immersion cooling applications where the battery stack is cooled with a dielectric coolant fluid has complex flow patterns that are not modeled easily without high fidelity modeling. Furthermore, some conventional approaches utilized Machine Learning (ML) model which are data driven and the ML models are sensitive to change in boundary conditions of the system, that means their performance is poor when the boundary conditions of the system are different from that of boundary conditions of the data used to train the model. Similar problems exist with the empirical models.

To overcome the challenges of the conventional approaches, embodiments herein provide a method and system for computing temperature parameters in reduced-order transient conjugate heat transfer system. The present disclosure combines physics-based and data-driven techniques to compute temperature parameters of the conjugate heat transfer system in an accurate and faster manner. Combining physics-based and data-driven techniques is a challenging process due to discrepancies between the models, nonlinearities of the physical system, dimensionality reduction, complexity of integrating models effectively, computational complexity, and need for accurate training data. Initially, a plurality of input parameters pertaining to a transient conjugate heat transfer system is received. Further, a plurality of fluid velocity reduced coefficients and a plurality of fluid pressure reduced coefficients associated with the conjugate heat transfer system is computed based on a first plurality of fluid steady state reduced basis equations, the plurality of input parameters and a plurality of reduced order matrices. Further, a fluid velocity field and a fluid pressure field are computed based on the plurality of fluid velocity reduced coefficients, the plurality of fluid pressure reduced coefficients and the first reduced subspace. Followed by that, a fluid mass flux is computed based on the fluid velocity field and the fluid pressure field using an equation solver. After computing the fluid mass flux, a plurality of fluid temperature reduced coefficients and a plurality of battery temperature reduced coefficients associated with the conjugate heat transfer system are computed. Finally, the fluid temperature field and the battery temperature field associated with the transient conjugate heat transfer system is computed based on the plurality of fluid temperature reduced coefficients and the plurality of battery temperature reduced coefficients, and the second reduced subspace.

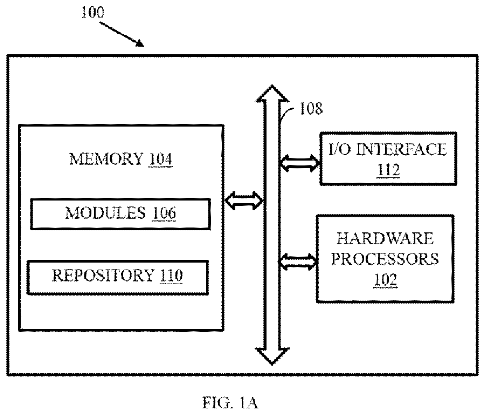

Referring now to the drawings, and more particularly to FIG. 1A through FIG. 4, where similar reference characters denote corresponding features consistently throughout the figures, there are shown preferred embodiments and these embodiments are described in the context of the following exemplary system and/or method.

FIG. 1A is a functional block diagram of a system 100 for Computing temperature parameters in reduced-order transient conjugate heat transfer system, in accordance with some embodiments of the present disclosure. The system 100 includes or is otherwise in communication with hardware processors 102, at least one memory such as a memory 104, an Input /Output (I/O) interface 112. The hardware processors 102, memory 104, and the I/O interface 112 may be coupled by a system bus such as a system bus 108 or a similar mechanism. In an embodiment, the hardware processors 102 can be one or more hardware processors.

The I/O interface 112 may include a variety of software and hardware interfaces, for example, a web interface, a graphical user interface, and the like. The I/O interface 112 may include a variety of software and hardware interfaces, for example, interfaces for peripheral device(s), such as a keyboard, a mouse, an external memory, a printer and the like. Further, the I/O interface 112 may enable the system 100 to communicate with other devices, such as web servers, and external databases.

The I/O interface 112 can facilitate multiple communications within a wide variety of networks and protocol types, including wired networks, for example, local area network (LAN), cable, etc., and wireless networks, such as Wireless LAN (WLAN), cellular, or satellite. For the purpose, the I/O interface 112 may include one or more ports for connecting several computing systems with one another or to another server computer. The I/O interface 112 may include one or more ports for connecting several devices to one another or to another server.

The one or more hardware processors 102 may be implemented as one or more microprocessors, microcomputers, microcontrollers, digital signal processors, central processing units, node machines, logic circuitries, and/or any devices that manipulate signals based on operational instructions. Among other capabilities, the one or more hardware processors 102 is configured to fetch and execute computer-readable instructions stored in the memory 104.

The memory 104 may include any computer-readable medium known in the art including, for example, volatile memory, such as static random access memory (SRAM) and dynamic random access memory (DRAM), and/or non-volatile memory, such as read only memory (ROM), erasable programmable ROM, flash memories, hard disks, optical disks, and magnetic tapes. In an embodiment, the memory 104 includes a plurality of modules 106. The memory 104 also includes a data repository (or repository) 110 for storing data processed, received, and generated by the plurality of modules 106.

The plurality of modules 106 include programs or coded instructions that supplement applications or functions performed by the system 100 for Computing temperature parameters in reduced-order transient conjugate heat transfer system. The plurality of modules 106, amongst other things, can include routines, programs, objects, components, and data structures, which performs particular tasks or implement particular abstract data types. The plurality of modules 106 may also be used as, signal processor(s), node machine(s), logic circuitries, and/or any other device or component that manipulates signals based on operational instructions. Further, the plurality of modules 106 can be used by hardware, by computer-readable instructions executed by the one or more hardware processors 102, or by a combination thereof. The plurality of modules 106 can include various sub-modules (not shown). The plurality of modules 106 may include computer-readable instructions that supplement applications or functions performed by the system 100 for Computing temperature parameters in reduced-order transient conjugate heat transfer system.

The data repository (or repository) 110 may include a plurality of abstracted piece of code for refinement and data that is processed, received, or generated as a result of the execution of the plurality of modules in the module(s) 106.

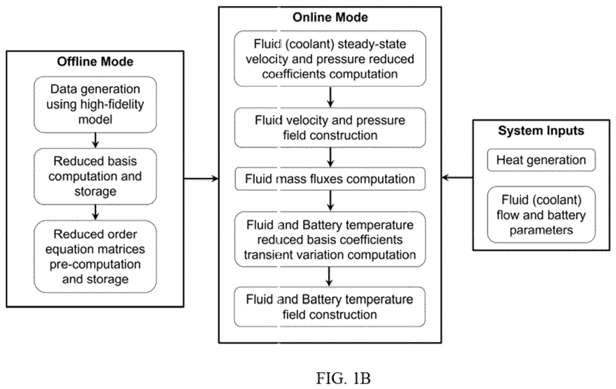

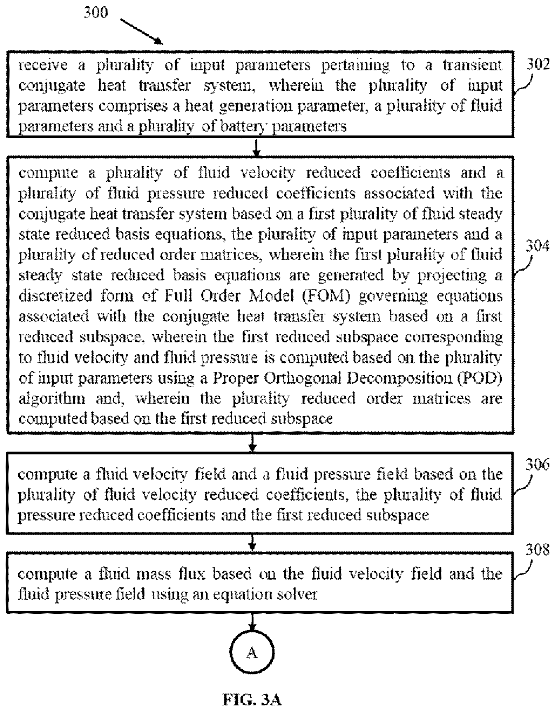

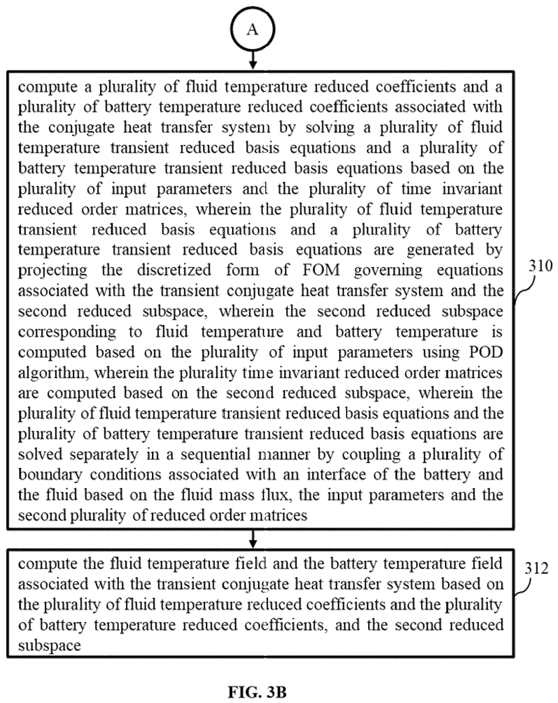

Although the data repository 110 is shown internal to the system 100, it will be noted that, in alternate embodiments, the data repository 110 can also be implemented external to the system 100, where the data repository 110 may be stored within a database (repository 110) communicatively coupled to the system 100. The data contained within such external database may be periodically updated. For example, new data may be added into the database (not shown in FIG. 1) and/or existing data may be modified and/or non-useful data may be deleted from the database. In one example, the data may be stored in an external system, such as a Lightweight Directory Access Protocol (LDAP) directory and a Relational Database Management System (RDBMS). Working of the components of the system 100 are explained with reference to the method steps depicted in FIG. 3.

FIG. 1B is a broad level process flow of system of FIG. 1A and can be understood with reference to method of FIG. 3

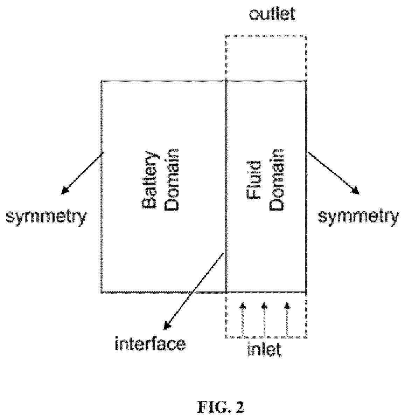

Generally, to meet the power requirements for an electric vehicle, several batteries are arranged in stack in series and parallel electrical connections. The heat generated in batteries during charge and discharge is dissipated to surrounding coolant flow, as shown in FIG. 2, to maintain the temperature of batteries in operating limit. The heat dissipation rate depends on many factors and coolant flow rate is one of them. The coolant flow rate can be adjusted by changing Reynolds number (Re) and vice versa. The Reynolds number is the ratio of inertial forces to viscous forces within a fluid that is subjected to relative internal movement due to different fluid velocities.

FIG. 3 is an exemplary flow diagrams illustrating a method 300 for computing temperature parameters in reduced-order transient conjugate heat transfer system implemented by the system of FIG. 1A according to some embodiments of the present disclosure. In an embodiment, the system 100 includes one or more data storage devices or the memory 104 operatively coupled to the one or more hardware processor(s) 102 and is configured to store instructions for execution of steps of the method 300 by the one or more hardware processors 102. The steps of the method 300 of the present disclosure will now be explained with reference to the components or blocks of the system 100 as depicted in FIG. 1A and the steps of flow diagram as depicted in FIG. 3. The method 300 may be described in the general context of computer executable instructions. Generally, computer executable instructions can include routines, programs, objects, components, data structures, procedures, modules, functions, etc., that perform particular functions or implement particular abstract data types. The method 300 may also be practiced in a distributed computing environment where functions are performed by remote processing devices that are linked through a communication network. The order in which the method 300 is described is not intended to be construed as a limitation, and any number of the described method blocks can be combined in any order to implement the method 300, or an alternative method. Furthermore, the method 300 can be implemented in any suitable hardware, software, firmware, or combination thereof.

At step 302 of the method 300, the one or more hardware processors 102 are configured by the programmed instructions to receive a plurality of input parameters pertaining to a transient conjugate heat transfer system, wherein the plurality of input parameters comprises a heat generation parameter, a plurality of fluid parameters and a plurality of battery parameters. For example, the plurality of fluid parameters includes fluid inlet velocity, fluid inlet temperature, fluid specific heat capacity, fluid density, fluid thermal conductivity, fluid viscosity, and coolant channel dimensions. Similarly, the plurality of battery parameters includes ambient temperature, specific heat capacity of battery, battery density, thermal conductivity of battery, and battery dimensions.

At step 304 of the method 300, the one or more hardware processors 102 are configured by the programmed instructions to compute a plurality of fluid velocity reduced coefficients and a plurality of fluid pressure reduced coefficients associated with the conjugate heat transfer system based on a first plurality of fluid steady state reduced basis equations, the plurality of input parameters and a plurality of reduced order matrices. The first plurality of fluid steady state reduced basis equations are generated offline by projecting a discretized form of Full Order Model (FOM) governing equations associated with the conjugate heat transfer system based on a first reduced subspace. The first reduced subspace corresponding to fluid velocity and fluid pressure is computed based on the plurality of input parameters using a Proper Orthogonal Decomposition (POD) algorithm. Further, the plurality of reduced order matrices are computed based on the first reduced subspace.

The plurality of fluid velocity reduced coefficients and a plurality of fluid pressure reduced coefficients are computed in online mode from their respective reduced order equations as mentioned below:

$$a_r^{n+1} = a_r^n + \Delta t \left( -C_r^u a_r^{n+1} - \frac{1}{\rho_F} G_r b_r^{n+1} + \nu D_r^u a_r^{n+1} + r_r^u \right) \dots\dots\dots\dots\dots\dots(1)$$

$$L_r b_r^{n+1} = \frac{\rho_F}{\Delta t} (M_r a_r^n + r_r^M) - r_r^L \dots\dots\dots\dots\dots\dots(2)$$

Where $a_r^{n+1}$ and $b_r^{n+1}$ are the velocity and pressure reduced basis coefficients at the current time step. $a_r^n$ and $b_r^n$ are the velocity and pressure reduced basis coefficients of the previous time step. $D_r^u$, and $M_r$ are linear Reduced order discretization operators (Reduced order matrices) and they are precomputed in offline mode once. $r_r^u$, $r_r^L$, and $r_r^M$ are Reduced order boundary vectors (matrices) and these are also precomputed in offline mode once. $C_r^u$ is a nonlinear velocity Reduced order convection matrix which is computed as follows:

$$C_r^u = (a_r^n)^T C_1 + (b_r^n)^T C_2 \dots\dots\dots\dots\dots\dots(3)$$

Where $C_1$ is evaluated from $\Psi_r^T C_P^u \Psi_r$ with nonlinear convection matrix $C_P^u$ containing flux with only velocity term, and

$C_2$ is evaluated from $\Psi_r^T C_P^u \Psi_r$ with $C_P^u$ containing flux with only pressure term. Both $C_1$ and $C_2$ are precomputed once and stored as third-order tensors. $C_P^u$ is the nonlinear velocity convection matrix.

At step 306 of the method 300, the one or more hardware processors 102 are configured by the programmed instructions to compute a fluid velocity field and a fluid pressure field based on the plurality of fluid velocity reduced coefficients, the plurality of fluid pressure reduced coefficients and the first reduced subspace.

Once reduced basis coefficient of velocity and pressure at steady state are obtained for a specific parameter then their reduced order solution is constructed as follows:

$$u_r = \Psi_r a_r \ldots\ldots\ldots\ldots (4)$$

$$p_r = X_r b_r \ldots\ldots\ldots\ldots (5)$$

Where $\Psi_r$ and $X_r$ are reduced sub basis of velocity and pressure fields respectively that are computed in offline mode.

At step 308 of the method 300, the one or more hardware processors 102 are configured by the programmed instructions to compute a fluid mass flux based on the fluid velocity field and the fluid pressure field using an equation solver.

At step 310 of the method 300, the one or more hardware processors 102 are configured by the programmed instructions to compute a plurality of fluid temperature reduced coefficients and a plurality of battery temperature reduced coefficients associated with the conjugate heat transfer system by solving a plurality of fluid temperature transient reduced basis equations and a plurality of battery temperature transient reduced basis equations based on the plurality of input parameters and the plurality of time invariant reduced order matrices. The plurality of fluid temperature transient reduced basis equations and a plurality of battery temperature transient reduced basis equations are generated offline by projecting the discretized form of FOM governing equations associated with the transient conjugate heat transfer system and the second reduced subspace. The second reduced subspace corresponding to fluid temperature and battery temperature is computed based on the plurality of input parameters using POD algorithm. The plurality of time invariant reduced order matrices are computed based on the second reduced subspace using. The plurality of fluid temperature transient reduced basis equations and the plurality of battery temperature transient reduced basis equations are solved separately in a sequential manner by coupling a plurality of boundary conditions associated with an interface of the battery and the fluid based on the fluid mass flux, the input parameters and the plurality of time invariant reduced order matrices.

The plurality of fluid temperature reduced coefficients and a plurality of battery temperature reduced coefficients are computed by solving the corresponding plurality of fluid temperature transient reduced basis equations and the plurality of battery temperature transient reduced basis equations as shown below:

$$c^{n+1} = c^n + \Delta t(-C_r^a c^{n+1} + \alpha_F D_r^a c^{n+1} + r_r^a) \ldots\ldots\ldots\ldots\ldots\ldots\ldots\ldots (6)$$

$$d^{n+1} = d^n + \Delta t\left(\alpha_S D_r^b d^{n+1} + Q_{g_r} + r_r^b\right) \ldots\ldots\ldots\ldots\ldots\ldots (7)$$

Where $c_r^{n+1}$ and $d_r^{n+1}$ are the fluid and battery temperature reduced basis coefficients at the current time step. $c_r^n$ and $d_r^n$ are the fluid and battery temperature reduced basis coefficients of the previous time step. $C_r^a, D_r^a$, and $D_r^b$ are reduced order discretization operators (plurality of time invariant reduced order matrices). $r_r^a$ and $r_r^b$ are the reduced order boundary vectors (matrices). $Q_{g_r}$ is the reduced order heat generation vector (matrix). All these matrices are precomputed once in offline mode. At every time-step, the battery domain temperature equation is solved first with the temperature at interface $T_{S_{IF}}$ computed using heat flux as Neumann boundary condition from the fluid domain. After the solid domain temperature solution, the fluid domain temperature equation is solved with the temperature at interface $T_{F_{IF}}$ computed by using Dirichlet boundary condition as mentioned in equation $T_{IF} = \frac{C_S T_{S_P} + C_F T_{F_P}}{C_S + C_F}$. This procedure is repeated until the difference between $T_{S_{IF}}$ and $T_{F_{IF}}$ is less than $10^{-5}$, proceeding to the next time-step. The time-stepping is continued till the steady-state is reached. The reduced basis solution of fluid and battery temperature are stored in separate matrices to couple them at the interface.

At step 312 of the method 300, the one or more hardware processors 102 are configured by the programmed instructions to compute the fluid temperature field and the battery temperature field associated with the transient conjugate heat transfer system based on the plurality of fluid temperature reduced coefficients and the plurality of battery temperature reduced coefficients, and the second reduced subspace.

Once reduced basis coefficient of fluid domain and battery domain temperature are obtained then their reduced order solution is constructed as follows:

$$T_{F_r} = \mathbf{\Phi}_r c_r \ \dots\dots\dots\dots\dots\dots (8)$$

$$T_{S_r} = \mathbf{Z}_r d_r \ \dots\dots\dots\dots\dots\dots (9)$$

Where $\mathbf{\Phi_r}$, and $\mathbf{Z_r}$ are reduced basis for fluid temperature and battery temperature fields.

**Test Case Results:** In an embodiment, the reduced order solution is constructed for seven different Reynolds numbers, $Re_r \in$ (250, 500, 750, 1000, 1250, 1500, 1750). The reduced basis is calculated using three Reynolds numbers, $Re_p \in$ (250, 750, 1250), FOM simulation data and reduced order solution is constructed for all seven Reynolds numbers, $Re_r$. Even though the reduced basis is extracted only from the data of $Re_p$, the ROM solution constructed for all the Reynolds numbers $Re_r$ is accurate.

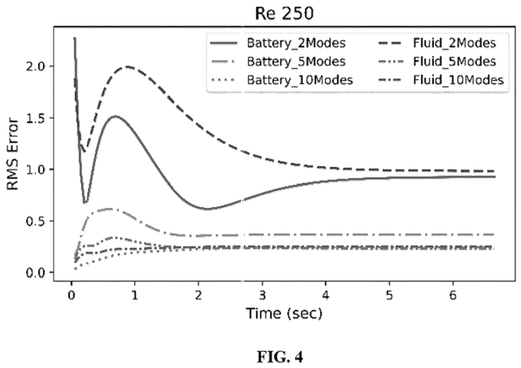

An example Root Mean Squared (RMS) error plot of fluid and battery ROM temperature solution with respect to FOM as a function of time up to steady-state for the Reynolds number $Re_r$ 250 with 2, 5, and 10 modes is shown in FIG. 4. The RMS error of fluid and battery temperature ROM solution is around 1.5K with 2 modes and within 0.5K with 5 modes for all the seven Reynolds numbers $Re_r$. It is observed that, for constructing the fluid and battery temperature ROM solution, 5 modes are sufficient as there is no significant variation in the solution with further increase in the number of modes. The ROM computational speed-up with respect to FOM is 8.6-13.8 times with 2 modes and approximately 4-7.4 times with 5 modes.

The written description describes the subject matter herein to enable any person skilled in the art to make and use the embodiments. The scope of the subject matter embodiments is defined by the claims and may include other modifications that occur to those skilled in the art. Such other modifications are intended to be within the scope of the claims if they have similar elements that do not differ from the literal language of the claims or if they include equivalent elements with insubstantial differences from the literal language of the claims.

The embodiments of present disclosure herein address the unresolved problem of Computing temperature parameters in reduced-order transient conjugate heat transfer system. The present disclosure provides temperature results about orders of magnitude faster compared to FOM. The present disclosure works well both in the interpolation and extrapolation regions. Further, the present solves FOM governing equations to compute reduced-order coefficients. Here, the battery and fluid (coolant) domains are solved separately and coupled at interface by storing reduced sub space values of interface temperature in separate matrices in such a way that they can be used in the computations directly.

It is to be understood that the scope of the protection is extended to such a program and in addition to a computer-readable means having a message therein such computer-readable storage means contain program-code means for implementation of one or more steps of the method when the program runs on a server or mobile device or any suitable programmable device. The hardware device can be any kind of device which can be programmed including e.g. any kind of computer like a server or a personal computer, or the like, or any combination thereof. The device may also include means which could be e.g. hardware means like e.g. an application-specific integrated circuit (ASIC), a field-programmable gate array (FPGA), or a combination of hardware and software means, e.g. an ASIC and an FPGA, or at least one microprocessor and at least one memory with software modules located therein. Thus, the means can include both hardware means and software means. The method embodiments described herein could be implemented in hardware and software. The device may also include software means. Alternatively, the embodiments may be implemented on different hardware devices, e.g. using a plurality of CPUs, GPUs and edge computing devices.

The embodiments herein can comprise hardware and software elements. The embodiments that are implemented in software include but are not limited to, firmware, resident software, microcode, etc. The functions performed by various modules described herein may be implemented in other modules or combinations of other modules. For the purposes of this description, a computer-usable or computer readable medium can be any apparatus that can comprise, store, communicate, propagate, or transport the program for use by or in connection with the instruction execution system, apparatus, or device. The illustrated steps are set out to explain the exemplary embodiments shown, and it should be anticipated that ongoing technological development will change the manner in which particular functions are performed. These examples are presented herein for purposes of illustration, and not limitation. Further, the boundaries of the functional building blocks have been arbitrarily defined herein for the convenience of the description. Alternative boundaries can be defined so long as the specified functions and relationships thereof are appropriately performed. Alternatives (including equivalents, extensions, variations, deviations, etc., of those described herein) will be apparent to persons skilled in the relevant art(s) based on the teachings contained herein. Such alternatives fall within the scope of the disclosed embodiments. Also, the words "comprising," "having," "containing," and "including," and other similar forms are intended to be equivalent in meaning and be open ended in that an item or items following any one of these words is not meant to be an exhaustive listing of such item or items or meant to be limited to only the listed item or items. It must also be noted that as used herein and in the appended claims, the singular forms "a," "an," and "the" include plural references unless the context clearly dictates otherwise. Furthermore, one or more computer-readable storage media may be utilized in implementing embodiments consistent with the present disclosure. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable medium" should be understood to include tangible items and exclude carrier waves and transient signals, i.e. non-transitory. Examples include random access memory (RAM), read-only memory (ROM), volatile memory, nonvolatile memory, hard drives, CD ROMs, DVDs, flash drives, disks, and any other known physical storage media.

It is intended that the disclosure and examples be considered as exemplary only, with a true scope of disclosed embodiments being indicated by the following claims.

## Claims

1.   A processor implemented method (300), the method comprising:

receiving (302), by one or more hardware processors, a plurality of input parameters pertaining to a transient conjugate heat transfer system, wherein the plurality of input parameters comprises a heat generation parameter, a plurality of fluid parameters and a plurality of battery parameters;

computing (304), by the one or more hardware processors, a plurality of fluid velocity reduced coefficients and a plurality of fluid pressure reduced coefficients associated with the conjugate heat transfer system based on a first plurality of fluid steady state reduced basis equations, the plurality of input parameters and a plurality of reduced order matrices,

wherein the first plurality of fluid steady state reduced basis equations are generated by projecting a discretized form of Full Order Model (FOM) governing equations associated with the conjugate heat transfer system based on a first reduced subspace,

wherein the first reduced subspace corresponding to fluid velocity and fluid pressure is computed based on the plurality of input parameters using a Proper Orthogonal Decomposition (POD) algorithm and, wherein the plurality of reduced order matrices are computed based on the first reduced subspace;

computing (306), by the one or more hardware processors, a fluid velocity field and a fluid pressure field based on the plurality of fluid velocity reduced coefficients, the plurality of fluid pressure reduced coefficients and the first reduced subspace;

computing (308), by the one or more hardware processors, a fluid mass flux based on the fluid velocity field and the fluid pressure field using an equation solver;

computing (310), by the one or more hardware processors, a plurality of fluid temperature reduced coefficients and a plurality of battery temperature reduced coefficients associated with the conjugate heat transfer system by solving a plurality of fluid temperature transient reduced basis equations and a plurality of battery temperature transient reduced basis equations based on the plurality of input parameters and the plurality of time invariant reduced order matrices,

wherein the plurality of fluid temperature transient reduced basis equations and a plurality of battery temperature transient reduced basis equations are generated by projecting the discretized form of FOM governing equations associated with the transient conjugate heat transfer system and the second reduced subspace,

wherein the second reduced subspace corresponding to fluid temperature and battery temperature is computed based on the plurality of input parameters using POD algorithm, wherein the plurality of time invariant reduced order matrices are computed based on the second reduced subspace, and

wherein the plurality of fluid temperature transient reduced basis equations and the plurality of battery temperature transient reduced basis equations are solved separately in a sequential manner by coupling a plurality of boundary conditions associated with an interface of the battery and the fluid based on the fluid mass flux, the input parameters and the second plurality of reduced order matrices; and

computing (312), by the one or more hardware processors, the fluid temperature field and the battery temperature field associated with the transient conjugate heat transfer system based on the plurality of fluid temperature reduced coefficients and the plurality of battery temperature reduced coefficients, and the second reduced subspace to model behavior of a battery in a virtual environment to optimize and predict State of Charge (SoC) and State of Health (SoH) of the battery.

2. The method of claim 1, wherein the high-fidelity full order model data comprises a plurality of parameters, the plurality of boundary conditions and a plurality of time instants.

3. The method of claim 1, wherein the plurality of fluid parameters comprises fluid inlet velocity, fluid inlet temperature, fluid specific heat capacity, fluid density, fluid thermal conductivity, fluid viscosity, and coolant channel dimensions.

4. The method of claim 1, wherein the plurality of battery parameters comprises ambient temperature, specific heat capacity of battery, battery density, thermal conductivity of battery, and battery dimensions.

5. A system (100) comprising:
at least one memory (104) storing programmed instructions; one or more Input /Output (I/O) interfaces (112); and one or more hardware processors (102) operatively coupled to the at least one memory (104), wherein the one or more hardware processors (102) are configured by the programmed instructions to:

receive a plurality of input parameters pertaining to a transient conjugate heat transfer system, wherein the plurality of input parameters comprises a heat generation parameter, a plurality of fluid parameters and a plurality of battery parameters;
compute a plurality of fluid velocity reduced coefficients and a plurality of fluid pressure reduced coefficients associated with the conjugate heat transfer system based on a first plurality of fluid steady state reduced basis equations, the plurality of input parameters and a plurality of reduced order matrices,

wherein the first plurality of fluid steady state reduced basis equations are generated by projecting a discretized form of Full Order Model (FOM) governing equations associated with the conjugate heat transfer system based on a first reduced subspace,
wherein the first reduced subspace corresponding to fluid velocity and fluid pressure is computed based on the plurality of input parameters using a Proper Orthogonal Decomposition (POD) algorithm and, wherein the plurality of reduced order matrices are computed based on the first reduced subspace;

compute a fluid velocity field and a fluid pressure field based on the plurality of fluid velocity reduced coefficients, the plurality of fluid pressure reduced coefficients and the first reduced subspace;
compute a fluid mass flux based on the fluid velocity field and the fluid pressure field using an equation solver;
compute a plurality of fluid temperature reduced coefficients and a plurality of battery temperature reduced coefficients associated with the conjugate heat transfer system by solving a plurality of fluid temperature transient reduced basis equations and a plurality of battery temperature transient reduced basis equations based on the plurality of input parameters and the plurality of time invariant reduced order matrices,

wherein the plurality of fluid temperature transient reduced basis equations and a plurality of battery temperature transient reduced basis equations are generated by projecting the discretized form of FOM governing equations associated with the transient conjugate heat transfer system and the second reduced subspace,
wherein the second reduced subspace corresponding to fluid temperature and battery temperature is computed based on the plurality of input parameters using POD algorithm, wherein the plurality of time invariant reduced order matrices are computed based on the second reduced subspace, and
wherein the plurality of fluid temperature transient reduced basis equations and the plurality of battery temperature transient reduced basis equations are solved separately in a sequential manner by coupling a plurality of boundary conditions associated with an interface of the battery and the fluid based on the fluid mass flux, the input parameters and the second plurality of reduced order matrices; and

compute the fluid temperature field and the battery temperature field associated with the transient conjugate heat transfer system based on the plurality of fluid temperature reduced coefficients and the plurality of battery temperature reduced coefficients, and the second reduced subspace- to model behavior of a battery in a virtual environment to optimize and predict State of Charge (SoC) and State of Health (SoH) of the battery.

6. The system of claim 5, wherein the high-fidelity full order model data comprises a plurality of parameters, the plurality of boundary conditions and a plurality of time instants.

7. The system of claim 5, wherein the plurality of fluid parameters comprises fluid inlet velocity, fluid inlet temperature, fluid specific heat capacity, fluid density, fluid thermal conductivity, fluid viscosity, and coolant channel dimensions.

8. The system of claim 5, wherein the plurality of battery parameters comprises ambient temperature, specific heat capacity of battery, battery density, thermal conductivity of battery, and battery dimensions.

9. One or more non-transitory machine-readable information storage mediums comprising one or more instructions which when executed by one or more hardware processors cause:

receiving a plurality of input parameters pertaining to a transient conjugate heat transfer system, wherein the plurality of input parameters comprises a heat generation parameter, a plurality of fluid parameters and a plurality of battery parameters;
computing a plurality of fluid velocity reduced coefficients and a plurality of fluid pressure reduced coefficients associated with the conjugate heat transfer system based on a first plurality of fluid steady state reduced basis equations, the plurality of input parameters and a plurality of reduced order matrices,

wherein the first plurality of fluid steady state reduced basis equations are generated by projecting a discretized form of Full Order Model (FOM) governing equations associated with the conjugate heat transfer system based on a first reduced subspace,
wherein the first reduced subspace corresponding to fluid velocity and fluid pressure is computed based on the plurality of input parameters using a Proper Orthogonal Decomposition (POD) algorithm and, wherein the plurality of reduced order matrices are computed based on the first reduced subspace;

computing a fluid velocity field and a fluid pressure field based on the plurality of fluid velocity reduced coefficients, the plurality of fluid pressure reduced coefficients and the first reduced subspace;
computing a fluid mass flux based on the fluid velocity field and the fluid pressure field using an equation solver;
computing a plurality of fluid temperature reduced coefficients and a plurality of battery temperature reduced coefficients associated with the conjugate heat transfer system by solving a plurality of fluid temperature transient reduced basis equations and a plurality of battery temperature transient reduced basis equations based on the plurality of input parameters and the plurality of time invariant reduced order matrices,

wherein the plurality of fluid temperature transient reduced basis equations and a plurality of battery temperature transient reduced basis equations are generated by projecting the discretized form of FOM governing equations associated with the transient conjugate heat transfer system and the second reduced subspace,
wherein the second reduced subspace corresponding to fluid temperature and battery temperature is computed based on the plurality of input parameters using POD algorithm, wherein the plurality of time invariant reduced order matrices are computed based on the second reduced subspace, and
wherein the plurality of fluid temperature transient reduced basis equations and the plurality of battery temperature transient reduced basis equations are solved separately in a sequential manner by coupling a plurality of boundary conditions associated with an interface of the battery and the fluid based on the fluid mass flux, the input parameters and the second plurality of reduced order matrices; and

computing the fluid temperature field and the battery temperature field associated with the transient conjugate heat transfer system based on the plurality of fluid temperature reduced coefficients and the plurality of battery temperature reduced coefficients, and the second reduced subspace to model behavior of a battery in a virtual environment to optimize and predict State of Charge (SoC) and State of Health (SoH) of the battery.

10. The one or more non-transitory machine-readable information storage mediums of claim 9, wherein the high-fidelity full order model data comprises a plurality of parameters, the plurality of boundary conditions and a plurality of time instants.

11. The one or more non-transitory machine-readable information storage mediums of claim 9, wherein the plurality of fluid parameters comprises fluid inlet velocity, fluid inlet temperature, fluid specific heat capacity, fluid density, fluid thermal conductivity, fluid viscosity, and coolant channel dimensions.

12. The one or more non-transitory machine-readable information storage mediums of claim 9, wherein the plurality of battery parameters comprises ambient temperature, specific heat capacity of battery, battery density, thermal conductivity of battery, and battery dimensions.

**Patentansprüche**

1. Prozessorimplementiertes Verfahren (300), wobei das Verfahren umfasst:

Empfangen (302), durch einen oder mehrere Hardwareprozessoren, einer Mehrzahl von Eingabeparametern, die sich auf ein transientes konjugiertes Wärmeübertragungssystem beziehen, wobei die Mehrzahl von Eingabeparametern einen Wärmeerzeugungsparameter, eine Mehrzahl von Fluidparametern und eine Mehrzahl von Batterieparametern umfasst;

Berechnen (304), durch den einen oder die mehreren Hardwareprozessoren, einer Mehrzahl von fluidgeschwindigkeitsreduzierten Koeffizienten und einer Mehrzahl von fluiddruckreduzierten Koeffizienten, die dem konjugierten Wärmeübertragungssystem zugeordnet sind, basierend auf einer ersten Mehrzahl von fluidstabilen reduzierten Basisgleichungen, der Mehrzahl von Eingabeparametern und einer Mehrzahl von Matrizen reduzierter Ordnung,

wobei die erste Mehrzahl von fluidstabilen reduzierten Basisgleichungen durch Projizieren einer diskretisierten Form von Vollordnungs-Modell (Full Order Model, FOM)-Regelungsgleichungen, die dem konjugierten Wärmeübertragungssystem zugeordnet sind, basierend auf einem ersten reduzierten Unterraum erzeugt wird,

wobei der erste reduzierte Unterraum, der der Fluidgeschwindigkeit und dem Fluiddruck entspricht, basierend auf der Mehrzahl von Eingabeparametern unter Verwendung eines Algorithmus der korrekten orthogonalen Zerlegung (Proper Orthogonal Decomposition, POD) berechnet wird, und wobei die Mehrzahl von Matrizen reduzierter Ordnung basierend auf dem ersten reduzierten Unterraum berechnet wird;

Berechnen (306), durch den einen oder die mehreren Hardwareprozessoren, eines Fluidgeschwindigkeitsfelds und eines Fluiddruckfelds basierend auf der Mehrzahl von fluidgeschwindigkeitsreduzierten Koeffizienten, der Mehrzahl von fluiddruckreduzierten Koeffizienten und dem ersten reduzierten Unterraum;

Berechnen (308), durch den einen oder die mehreren Hardwareprozessoren, eines Fluidmassenflusses basierend auf dem Fluidgeschwindigkeitsfeld und dem Fluiddruckfeld unter Verwendung eines Gleichungslösers;

Berechnen (310), durch den einen oder die mehreren Hardwareprozessoren, einer Mehrzahl von fluidtemperaturreduzierten Koeffizienten und einer Mehrzahl von batterietemperaturreduzierten Koeffizienten, die dem konjugierten Wärmeübertragungssystem zugeordnet sind, durch Lösen einer Mehrzahl von fluidtemperaturtransienten reduzierten Basisgleichungen und einer Mehrzahl von batterietemperaturtransienten reduzierten Basisgleichungen basierend auf der Mehrzahl von Eingabeparametern und der Mehrzahl von zeitinvarianten Matrizen reduzierter Ordnung,

wobei die Mehrzahl von fluidtemperaturtransienten reduzierten Basisgleichungen und eine Mehrzahl von batterietemperaturtransienten reduzierten Basisgleichungen durch Projizieren der diskretisierten Form von FOM-Regelungsgleichungen, die dem transienten konjugierten Wärmeübertragungssystem zugeordnet sind, und des zweiten reduzierten Unterraums erzeugt wird,

wobei der zweite reduzierte Unterraum, der der Fluidtemperatur und der Batterietemperatur entspricht, basierend auf der Mehrzahl von Eingabeparametern unter Verwendung eines POD-Algorithmus berechnet wird, wobei die Mehrzahl von zeitinvarianten Matrizen reduzierter Ordnung basierend auf dem zweiten reduzierten Unterraum berechnet wird, und

wobei die Mehrzahl von fluidtemperaturtransienten reduzierten Basisgleichungen und die Mehrzahl von batterietemperaturtransienten reduzierten Basisgleichungen separat in einer sequentiellen Weise durch Koppeln einer Mehrzahl von Randbedingungen, die einer Schnittstelle der Batterie und des Fluids zugeordnet sind, basierend auf dem Fluidmassenfluss, den Eingabeparametern und der zweiten Mehrzahl von Matrizen reduzierter Ordnung gelöst werden; und

Berechnen (312), durch den einen oder die mehreren Hardwareprozessoren, des Fluidtemperaturfelds und des Batterietemperaturfelds, die dem transienten konjugierten Wärmeübertragungssystem zugeordnet sind, basierend auf der Mehrzahl von fluidtemperaturreduzierten Koeffizienten und der Mehrzahl von batterietemperaturreduzierten Koeffizienten und dem zweiten reduzierten Unterraum, um das Verhalten einer Batterie in einer virtuellen Umgebung zu modellieren, um den Ladezustand (State of Charge, SoC) und den Gesundheitszustand (State of Health, SoH) der Batterie zu optimieren und vorherzusagen.

2. Verfahren nach Anspruch 1, wobei die hochgenauen Modelldaten voller Ordnung eine Mehrzahl von Parametern, die Mehrzahl von Randbedingungen und eine Mehrzahl von Zeitpunkten umfassen.

3. Verfahren nach Anspruch 1, wobei die Mehrzahl von Fluidparametern Fluideinlassgeschwindigkeit, Fluideinlasstemperatur, fluidspezifische Wärmekapazität, Fluiddichte, Fluidwärmeleitfähigkeit, Fluidviskosität und Kühlmittelkanalabmessungen umfasst.

4. Verfahren nach Anspruch 1, wobei die Mehrzahl von Batterieparametern Umgebungstemperatur, spezifische Wärmekapazität der Batterie, Batteriedichte, Wärmeleitfähigkeit der Batterie und Batterieabmessungen umfasst.

5. System (100), umfassend:
mindestens einen Speicher (104), der programmierte Anweisungen speichert; eine oder mehrere Eingabe/Ausgabe(E/A)-Schnittstellen (112); und einen oder mehrere Hardwareprozessoren (102), die betriebsfähig mit dem mindestens einen Speicher (104) gekoppelt sind, wobei der eine oder die mehreren Hardwareprozessoren (102) durch die programmierten Anweisungen konfiguriert sind zum:

Empfangen einer Mehrzahl von Eingabeparametern, die sich auf ein transientes konjugiertes Wärmeübertragungssystem beziehen, wobei die Mehrzahl von Eingabeparametern einen Wärmeerzeugungsparameter, eine Mehrzahl von Fluidparametern und eine Mehrzahl von Batterieparametern umfasst;
Berechnen einer Mehrzahl von fluidgeschwindigkeitsreduzierten Koeffizienten und einer Mehrzahl von fluiddruckreduzierten Koeffizienten, die dem konjugierten Wärmeübertragungssystem zugeordnet sind, basierend auf einer ersten Mehrzahl von fluidstabilen reduzierten Basisgleichungen, der Mehrzahl von Eingabeparametern und einer Mehrzahl von Matrizen reduzierter Ordnung,

wobei die erste Mehrzahl von fluidstabilen reduzierten Basisgleichungen durch Projizieren einer diskretisierten Form von Vollordnungs-Modell (Full Order Model, FOM)-Regelungsgleichungen, die dem konjugierten Wärmeübertragungssystem zugeordnet sind, basierend auf einem ersten reduzierten Unterraum erzeugt wird,
wobei der erste reduzierte Unterraum, der der Fluidgeschwindigkeit und dem Fluiddruck entspricht, basierend auf der Mehrzahl von Eingabeparametern unter Verwendung eines Algorithmus der korrekten orthogonalen Zerlegung (Proper Orthogonal Decomposition, POD) berechnet wird, und wobei die Mehrzahl von Matrizen reduzierter Ordnung basierend auf dem ersten reduzierten Unterraum berechnet wird;

Berechnen eines Fluidgeschwindigkeitsfelds und eines Fluiddruckfelds basierend auf der Mehrzahl von fluidgeschwindigkeitsreduzierten Koeffizienten, der Mehrzahl von fluiddruckreduzierten Koeffizienten und dem ersten reduzierten Unterraum;
Berechnen eines Fluidmassenflusses basierend auf dem Fluidgeschwindigkeitsfeld und dem Fluiddruckfeld unter Verwendung eines Gleichungslösers;
Berechnen einer Mehrzahl von fluidtemperaturreduzierten Koeffizienten und einer Mehrzahl von batterietemperaturreduzierten Koeffizienten, die dem konjugierten Wärmeübertragungssystem zugeordnet sind, durch Lösen einer Mehrzahl von fluidtemperaturtransienten reduzierten Basisgleichungen und einer Mehrzahl von batterietemperaturtransienten reduzierten Basisgleichungen basierend auf der Mehrzahl von Eingabeparametern und der Mehrzahl von zeitinvarianten Matrizen reduzierter Ordnung,

wobei die Mehrzahl von fluidtemperaturtransienten reduzierten Basisgleichungen und eine Mehrzahl von batterietemperaturtransienten reduzierten Basisgleichungen durch Projizieren der diskretisierten Form von FOM-Regelungsgleichungen, die dem transienten konjugierten Wärmeübertragungssystem zugeordnet sind, und des zweiten reduzierten Unterraums erzeugt wird,
wobei der zweite reduzierte Unterraum, der der Fluidtemperatur und der Batterietemperatur entspricht, basierend auf der Mehrzahl von Eingabeparametern unter Verwendung eines POD-Algorithmus berechnet wird, wobei die Mehrzahl von zeitinvarianten Matrizen reduzierter Ordnung basierend auf dem zweiten reduzierten Unterraum berechnet wird, und
wobei die Mehrzahl von fluidtemperaturtransienten reduzierten Basisgleichungen und die Mehrzahl von batterietemperaturtransienten reduzierten Basisgleichungen separat in einer sequentiellen Weise durch Koppeln einer Mehrzahl von Randbedingungen, die einer Schnittstelle der Batterie und des Fluids zugeordnet sind, basierend auf dem Fluidmassenfluss, den Eingabeparametern und der zweiten Mehrzahl von Matrizen reduzierter Ordnung gelöst werden; und

Berechnen des Fluidtemperaturfelds und des Batterietemperaturfelds, die dem transienten konjugierten Wärmeübertragungssystem zugeordnet sind, basierend auf der Mehrzahl von fluidtemperaturreduzierten Koeffizienten und der Mehrzahl von batterietemperaturreduzierten Koeffizienten und dem zweiten reduzierten Unterraum, um das Verhalten einer Batterie in einer virtuellen Umgebung zu modellieren, um den Ladezustand (State of Charge, SoC) und den Gesundheitszustand (State of Health, SoH) der Batterie zu optimieren und vorherzusagen.

6. System nach Anspruch 5, wobei die hochgenauen Modelldaten voller Ordnung eine Mehrzahl von Parametern, die Mehrzahl von Randbedingungen und eine Mehrzahl von Zeitpunkten umfassen.

7. System nach Anspruch 5, wobei die Mehrzahl von Fluidparametern Fluideinlassgeschwindigkeit, Fluideinlasstemperatur, fluidspezifische Wärmekapazität, Fluiddichte, Fluidwärmeleitfähigkeit, Fluidviskosität und Kühlmittelkanalabmessungen umfasst.

8. System nach Anspruch 5, wobei die Mehrzahl von Batterieparametern Umgebungstemperatur, spezifische Wärmekapazität der Batterie, Batteriedichte, Wärmeleitfähigkeit der Batterie und Batterieabmessungen umfasst.

9. Ein oder mehrere nichtflüchtige maschinenlesbare Informationsspeichermedien, die eine oder mehrere Anweisungen umfassen, die, wenn sie von einem oder mehreren Hardwareprozessoren ausgeführt werden, bewirken:

Empfangen einer Mehrzahl von Eingabeparametern, die sich auf ein transientes konjugiertes Wärmeübertragungssystem beziehen, wobei die Mehrzahl von Eingabeparametern einen Wärmeerzeugungsparameter, eine Mehrzahl von Fluidparametern und eine Mehrzahl von Batterieparametern umfasst;
Berechnen einer Mehrzahl von fluidgeschwindigkeitsreduzierten Koeffizienten und einer Mehrzahl von fluiddruckreduzierten Koeffizienten, die dem konjugierten Wärmeübertragungssystem zugeordnet sind, basierend auf einer ersten Mehrzahl von fluidstabilen reduzierten Basisgleichungen, der Mehrzahl von Eingabeparametern und einer Mehrzahl von Matrizen reduzierter Ordnung,

wobei die erste Mehrzahl von fluidstabilen reduzierten Basisgleichungen durch Projizieren einer diskretisierten Form von Vollordnungs-Modell (Full Order Model, FOM)-Regelungsgleichungen, die dem konjugierten Wärmeübertragungssystem zugeordnet sind, basierend auf einem ersten reduzierten Unterraum erzeugt wird,
wobei der erste reduzierte Unterraum, der der Fluidgeschwindigkeit und dem Fluiddruck entspricht, basierend auf der Mehrzahl von Eingabeparametern unter Verwendung eines Algorithmus der korrekten orthogonalen Zerlegung (Proper Orthogonal Decomposition, POD) berechnet wird, und wobei die Mehrzahl von Matrizen reduzierter Ordnung basierend auf dem ersten reduzierten Unterraum berechnet wird;

Berechnen eines Fluidgeschwindigkeitsfelds und eines Fluiddruckfelds basierend auf der Mehrzahl von fluidgeschwindigkeitsreduzierten Koeffizienten, der Mehrzahl von fluiddruckreduzierten Koeffizienten und dem ersten reduzierten Unterraum;
Berechnen eines Fluidmassenflusses basierend auf dem Fluidgeschwindigkeitsfeld und dem Fluiddruckfeld unter Verwendung eines Gleichungslösers;
Berechnen einer Mehrzahl von fluidtemperaturreduzierten Koeffizienten und einer Mehrzahl von batterietemperaturreduzierten Koeffizienten, die dem konjugierten Wärmeübertragungssystem zugeordnet sind, durch Lösen einer Mehrzahl von fluidtemperaturtransienten reduzierten Basisgleichungen und einer Mehrzahl von batterietemperaturtransienten reduzierten Basisgleichungen basierend auf der Mehrzahl von Eingabeparametern und der Mehrzahl von zeitinvarianten Matrizen reduzierter Ordnung,

wobei die Mehrzahl von fluidtemperaturtransienten reduzierten Basisgleichungen und eine Mehrzahl von batterietemperaturtransienten reduzierten Basisgleichungen durch Projizieren der diskretisierten Form von FOM-Regelungsgleichungen, die dem transienten konjugierten Wärmeübertragungssystem zugeordnet sind, und des zweiten reduzierten Unterraums erzeugt wird,
wobei der zweite reduzierte Unterraum, der der Fluidtemperatur und der Batterietemperatur entspricht, basierend auf der Mehrzahl von Eingabeparametern unter Verwendung eines POD-Algorithmus berechnet wird, wobei die Mehrzahl von zeitinvarianten Matrizen reduzierter Ordnung basierend auf dem zweiten reduzierten Unterraum berechnet wird, und

wobei die Mehrzahl von fluidtemperaturtransienten reduzierten Basisgleichungen und die Mehrzahl von batterietemperaturtransienten reduzierten Basisgleichungen separat in einer sequentiellen Weise durch Koppeln einer Mehrzahl von Randbedingungen, die einer Schnittstelle der Batterie und des Fluids zugeordnet sind, basierend auf dem Fluidmassenfluss, den Eingabeparametern und der zweiten Mehrzahl von Matrizen reduzierter Ordnung gelöst werden; und

Berechnen des Fluidtemperaturfelds und des Batterietemperaturfelds, die dem transienten konjugierten Wärmeübertragungssystem zugeordnet sind, basierend auf der Mehrzahl von fluidtemperaturreduzierten Koeffizienten und der Mehrzahl von batterietemperaturreduzierten Koeffizienten und dem zweiten reduzierten Unterraum, um das Verhalten einer Batterie in einer virtuellen Umgebung zu modellieren, um den Ladezustand (State of Charge, SoC) und den Gesundheitszustand (State of Health, SoH) der Batterie zu optimieren und vorherzusagen.

10. Ein oder mehrere nichtflüchtige maschinenlesbare Informationsspeichermedien nach Anspruch 9, wobei die hochgenauen Modelldaten voller Ordnung eine Mehrzahl von Parametern, die Mehrzahl von Randbedingungen und eine Mehrzahl von Zeitpunkten umfassen.

11. Ein oder mehrere nichtflüchtige maschinenlesbare Informationsspeichermedien nach Anspruch 9, wobei die Mehrzahl von Fluidparametern Fluideinlassgeschwindigkeit, Fluideinlasstemperatur, fluidspezifische Wärmekapazität, Fluiddichte, Fluidwärmeleitfähigkeit, Fluidviskosität und Kühlmittelkanalabmessungen umfasst.

12. Ein oder mehrere nichtflüchtige maschinenlesbare Informationsspeichermedien nach Anspruch 9, wobei die Mehrzahl von Batterieparametern Umgebungstemperatur, spezifische Wärmekapazität der Batterie, Batteriedichte, Wärmeleitfähigkeit der Batterie und Batterieabmessungen umfasst.

**Revendications**

1. Procédé mis en œuvre par processeur (300), le procédé comprenant :

la réception (302), par un ou plusieurs processeurs matériels, d'une pluralité de paramètres d'entrée relatifs à un système de transfert de chaleur conjugué transitoire, dans lequel la pluralité de paramètres d'entrée comprend un paramètre de génération de chaleur, une pluralité de paramètres de fluide et une pluralité de paramètres de batterie ;

le calcul (304), par les un ou plusieurs processeurs matériels, d'une pluralité de coefficients réduits de vitesse de fluide et d'une pluralité de coefficients réduits de pression de fluide associés au système de transfert de chaleur conjugué sur la base d'une première pluralité d'équations de base réduites en régime permanent de fluide, de la pluralité de paramètres d'entrée et d'une pluralité de matrices d'ordre réduit,

dans lequel la première pluralité d'équations de base réduites en régime permanent de fluide sont générées en projetant une forme discrétisée d'équations régnantes de modèle d'ordre complet (FOM) associées au système de transfert de chaleur conjugué sur la base d'un premier sous-espace réduit, dans lequel le premier sous-espace réduit correspondant à la vitesse de fluide et à la pression de fluide est calculé sur la base de la pluralité de paramètres d'entrée en utilisant un algorithme de décomposition orthogonale propre (POD) et, dans lequel la pluralité de matrices d'ordre réduit sont calculées sur la base du premier sous-espace réduit ;

le calcul (306), par les un ou plusieurs processeurs matériels, d'un champ de vitesse de fluide et d'un champ de pression de fluide sur la base de la pluralité de coefficients réduits de vitesse de fluide, de la pluralité de coefficients réduits de pression de fluide et du premier sous-espace réduit ;

le calcul (308), par les un ou plusieurs processeurs matériels, d'un débit massique de fluide sur la base du champ de vitesse de fluide et du champ de pression de fluide en utilisant un solveur d'équation ;

le calcul (310), par les un ou plusieurs processeurs matériels, d'une pluralité de coefficients réduits de température de fluide et d'une pluralité de coefficients réduits de température de batterie associés au système de transfert de chaleur conjugué en résolvant une pluralité d'équations de base réduites transitoires de température de fluide et une pluralité d'équations de base réduites transitoires de température de batterie sur la base de la pluralité de paramètres d'entrée et de la pluralité de matrices d'ordre réduit invariantes dans le temps,

dans lequel la pluralité d'équations de base réduites transitoires de température de fluide et une pluralité d'équations de base réduites transitoires de température de batterie sont générées en projetant la forme discrétisée d'équations régnantes de FOM associées au système de transfert de chaleur conjugué transitoire et au second sous-espace réduit,

dans lequel le second sous-espace réduit correspondant à la température de fluide et à la température de batterie est calculé sur la base de la pluralité de paramètres d'entrée en utilisant un algorithme POD, dans lequel la pluralité de matrices d'ordre réduit invariantes dans le temps sont calculées sur la base du second sous-espace réduit, et

dans lequel la pluralité d'équations de base réduites transitoires de température de fluide et la pluralité d'équations de base réduites transitoires de température de batterie sont résolues séparément d'une manière séquentielle en couplant une pluralité de conditions limites associées à une interface de la batterie et le fluide sur la base du débit massique de fluide, des paramètres d'entrée et de la seconde pluralité de matrices d'ordre réduit ; et

le calcul (312), par les un ou plusieurs processeurs matériels, du champ de température de fluide et du champ de température de batterie associés au système de transfert de chaleur conjugué transitoire sur la base de la pluralité de coefficients réduits de température de fluide et de la pluralité de coefficients réduits de température de batterie, et du second sous-espace réduit pour modéliser le comportement d'une batterie dans un environnement virtuel pour optimiser et prédire l'état de charge (SoC) et l'état de santé (SoH) de la batterie.

2. Procédé selon la revendication 1, dans lequel les données de modèle d'ordre complet de haute fidélité comprennent une pluralité de paramètres, la pluralité de conditions limites et une pluralité d'instants temporels.

3. Procédé selon la revendication 1, dans lequel la pluralité de paramètres de fluide comprend la vitesse d'entrée de fluide, la température d'entrée de fluide, la capacité thermique spécifique de fluide, la densité de fluide, la conductivité thermique de fluide, la viscosité de fluide et les dimensions de canal de réfrigérant.

4. Procédé selon la revendication 1, dans lequel la pluralité de paramètres de batterie comprend la température ambiante, la capacité thermique spécifique de batterie, la densité de batterie, la conductivité thermique de batterie et les dimensions de batterie.

5. Système (100) comprenant :
au moins une mémoire (104) stockant des instructions programmées ; une ou plusieurs interfaces d'entrée/sortie (E/S) (112) ; et un ou plusieurs processeurs matériels (102) couplés de manière opérationnelle à l'au moins une mémoire (104), dans lequel les un ou plusieurs processeurs matériels (102) sont configurés par les instructions programmées pour :

recevoir une pluralité de paramètres d'entrée relatifs à un système de transfert de chaleur conjugué transitoire, dans lequel la pluralité de paramètres d'entrée comprend un paramètre de génération de chaleur, une pluralité de paramètres de fluide et une pluralité de paramètres de batterie ;
calculer une pluralité de coefficients réduits de vitesse de fluide et une pluralité de coefficients réduits de pression de fluide associés au système de transfert de chaleur conjugué sur la base d'une première pluralité d'équations de base réduites en régime permanent de fluide, de la pluralité de paramètres d'entrée et d'une pluralité de matrices d'ordre réduit,

dans lequel la première pluralité d'équations de base réduites en régime permanent de fluide sont générées en projetant une forme discrétisée d'équations régnantes de modèle d'ordre complet (FOM) associées au système de transfert de chaleur conjugué sur la base d'un premier sous-espace réduit,
dans lequel le premier sous-espace réduit correspondant à la vitesse de fluide et à la pression de fluide est calculé sur la base de la pluralité de paramètres d'entrée en utilisant un algorithme de décomposition orthogonale propre (POD) et, dans lequel la pluralité de matrices d'ordre réduit sont calculées sur la base du premier sous-espace réduit ;

calculer un champ de vitesse de fluide et un champ de pression de fluide sur la base de la pluralité de coefficients réduits de vitesse de fluide, de la pluralité de coefficients réduits de pression de fluide et du premier sous-espace réduit ;
calculer un débit massique de fluide sur la base du champ de vitesse de fluide et du champ de pression de fluide en utilisant un solveur d'équation ;

calculer une pluralité de coefficients réduits de température de fluide et une pluralité de coefficients réduits de température de batterie associés au système de transfert de chaleur conjugué en résolvant une pluralité d'équations de base réduites transitoires de température de fluide et une pluralité d'équations de base réduites transitoires de température de batterie sur la base de la pluralité de paramètres d'entrée et de la pluralité de matrices d'ordre réduit invariantes dans le temps,

dans lequel la pluralité d'équations de base réduites transitoires de température de fluide et une pluralité d'équations de base réduites transitoires de température de batterie sont générées en projetant la forme discrétisée d'équations régnantes de FOM associées au système de transfert de chaleur conjugué transitoire et au second sous-espace réduit,
dans lequel le second sous-espace réduit correspondant à la température de fluide et à la température de batterie est calculé sur la base de la pluralité de paramètres d'entrée en utilisant un algorithme POD, dans lequel la pluralité de matrices d'ordre réduit invariantes dans le temps sont calculées sur la base du second sous-espace réduit, et
dans lequel la pluralité d'équations de base réduites transitoires de température de fluide et la pluralité d'équations de base réduites transitoires de température de batterie sont résolues séparément d'une manière séquentielle en couplant une pluralité de conditions limites associées à une interface de la batterie et le fluide sur la base du débit massique de fluide, des paramètres d'entrée et de la seconde pluralité de matrices d'ordre réduit ; et

calculer le champ de température de fluide et le champ de température de batterie associés au système de transfert de chaleur conjugué transitoire sur la base de la pluralité de coefficients réduits de température de fluide et de la pluralité de coefficients réduits de température de batterie, et du second sous-espace réduit pour modéliser le comportement d'une batterie dans un environnement virtuel pour optimiser et prédire l'état de charge (SoC) et l'état de santé (SoH) de la batterie.

6. Système selon la revendication 5, dans lequel les données de modèle d'ordre complet de haute fidélité comprennent une pluralité de paramètres, la pluralité de conditions limites et une pluralité d'instants temporels.

7. Système selon la revendication 5, dans lequel la pluralité de paramètres de fluide comprend la vitesse d'entrée de fluide, la température d'entrée de fluide, la capacité thermique spécifique de fluide, la densité de fluide, la conductivité thermique de fluide, la viscosité de fluide et les dimensions de canal de réfrigérant.

8. Système selon la revendication 5, dans lequel la pluralité de paramètres de batterie comprend la température ambiante, la capacité thermique spécifique de batterie, la densité de batterie, la conductivité thermique de batterie et les dimensions de batterie.

9. Un ou plusieurs supports de stockage d'informations lisibles par machine non transitoires comprenant une ou plusieurs instructions qui, lorsqu'elles sont exécutées par un ou plusieurs processeurs matériels, amènent :

la réception d'une pluralité de paramètres d'entrée relatifs à un système de transfert de chaleur conjugué transitoire, dans lequel la pluralité de paramètres d'entrée comprend un paramètre de génération de chaleur, une pluralité de paramètres de fluide et une pluralité de paramètres de batterie ;
le calcul d'une pluralité de coefficients réduits de vitesse de fluide et d'une pluralité de coefficients réduits de pression de fluide associés au système de transfert de chaleur conjugué sur la base d'une première pluralité d'équations de base réduites en régime permanent de fluide, de la pluralité de paramètres d'entrée et d'une pluralité de matrices d'ordre réduit,

dans lequel la première pluralité d'équations de base réduites en régime permanent de fluide sont générées en projetant une forme discrétisée d'équations régnantes de modèle d'ordre complet (FOM) associées au système de transfert de chaleur conjugué sur la base d'un premier sous-espace réduit,
dans lequel le premier sous-espace réduit correspondant à la vitesse de fluide et à la pression de fluide est calculé sur la base de la pluralité de paramètres d'entrée en utilisant un algorithme de décomposition orthogonale propre (POD) et, dans lequel la pluralité de matrices d'ordre réduit sont calculées sur la base du premier sous-espace réduit ;

le calcul d'un champ de vitesse de fluide et d'un champ de pression de fluide sur la base de la pluralité de coefficients réduits de vitesse de fluide, de la pluralité de coefficients réduits de pression de fluide et du premier sous-espace réduit ;

le calcul d'un débit massique de fluide sur la base du champ de vitesse de fluide et du champ de pression de fluide en utilisant un solveur d'équation ;

le calcul d'une pluralité de coefficients réduits de température de fluide et d'une pluralité de coefficients réduits de température de batterie associés au système de transfert de chaleur conjugué en résolvant une pluralité d'équations de base réduites transitoires de température de fluide et une pluralité d'équations de base réduites transitoires de température de batterie sur la base de la pluralité de paramètres d'entrée et de la pluralité de matrices d'ordre réduit invariantes dans le temps,

dans lequel la pluralité d'équations de base réduites transitoires de température de fluide et une pluralité d'équations de base réduites transitoires de température de batterie sont générées en projetant la forme discrétisée d'équations régnantes de FOM associées au système de transfert de chaleur conjugué transitoire et au second sous-espace réduit,

dans lequel le second sous-espace réduit correspondant à la température de fluide et à la température de batterie est calculé sur la base de la pluralité de paramètres d'entrée en utilisant un algorithme POD, dans lequel la pluralité de matrices d'ordre réduit invariantes dans le temps sont calculées sur la base du second sous-espace réduit, et

dans lequel la pluralité d'équations de base réduites transitoires de température de fluide et la pluralité d'équations de base réduites transitoires de température de batterie sont résolues séparément d'une manière séquentielle en couplant une pluralité de conditions limites associées à une interface de la batterie et le fluide sur la base du débit massique de fluide, des paramètres d'entrée et de la seconde pluralité de matrices d'ordre réduit ; et

le calcul du champ de température de fluide et du champ de température de batterie associés au système de transfert de chaleur conjugué transitoire sur la base de la pluralité de coefficients réduits de température de fluide et de la pluralité de coefficients réduits de température de batterie, et du second sous-espace réduit pour modéliser le comportement d'une batterie dans un environnement virtuel pour optimiser et prédire l'état de charge (SoC) et l'état de santé (SoH) de la batterie.

10. Un ou plusieurs supports de stockage d'informations lisibles par machine non transitoires selon la revendication 9, dans lequel les données de modèle d'ordre complet de haute fidélité comprennent une pluralité de paramètres, la pluralité de conditions limites et une pluralité d'instants temporels.

11. Un ou plusieurs supports de stockage d'informations lisibles par machine non transitoires selon la revendication 9, dans lequel la pluralité de paramètres de fluide comprend la vitesse d'entrée de fluide, la température d'entrée de fluide, la capacité thermique spécifique de fluide, la densité de fluide, la conductivité thermique de fluide, la viscosité de fluide et les dimensions de canal de réfrigérant.

12. Un ou plusieurs supports de stockage d'informations lisibles par machine non transitoires selon la revendication 9, dans lequel la pluralité de paramètres de batterie comprend la température ambiante, la capacité thermique spécifique de batterie, la densité de batterie, la conductivité thermique de batterie et les dimensions de batterie.

100

MEMORY 104

MODULES 106

REPOSITORY 110

108

I/O INTERFACE
112

HARDWARE
PROCESSORS
102

FIG. 1A

**Offline Mode**

Data generation using high-fidelity model

↓

Reduced basis computation and storage

↓

Reduced order equation matrices pre-computation and storage

**Online Mode**

Fluid (coolant) steady-state velocity and pressure reduced coefficients computation

↓

Fluid velocity and pressure field construction

↓

Fluid mass fluxes computation

↓

Fluid and Battery temperature reduced basis coefficients transient variation computation

↓

Fluid and Battery temperature field construction

**System Inputs**

Heat generation

Fluid (coolant) flow and battery parameters

FIG. 1B

**FIG. 2**

300

receive a plurality of input parameters pertaining to a transient conjugate heat transfer system, wherein the plurality of input parameters comprises a heat generation parameter, a plurality of fluid parameters and a plurality of battery parameters 302

compute a plurality of fluid velocity reduced coefficients and a plurality of fluid pressure reduced coefficients associated with the conjugate heat transfer system based on a first plurality of fluid steady state reduced basis equations, the plurality of input parameters and a plurality of reduced order matrices, wherein the first plurality of fluid steady state reduced basis equations are generated by projecting a discretized form of Full Order Model (FOM) governing equations associated with the conjugate heat transfer system based on a first reduced subspace, wherein the first reduced subspace corresponding to fluid velocity and fluid pressure is computed based on the plurality of input parameters using a Proper Orthogonal Decomposition (POD) algorithm and, wherein the plurality reduced order matrices are computed based on the first reduced subspace 304

compute a fluid velocity field and a fluid pressure field based on the plurality of fluid velocity reduced coefficients, the plurality of fluid pressure reduced coefficients and the first reduced subspace 306

compute a fluid mass flux based on the fluid velocity field and the fluid pressure field using an equation solver 308

A

**FIG. 3A**

A

compute a plurality of fluid temperature reduced coefficients and a plurality of battery temperature reduced coefficients associated with the conjugate heat transfer system by solving a plurality of fluid temperature transient reduced basis equations and a plurality of battery temperature transient reduced basis equations based on the plurality of input parameters and the plurality of time invariant reduced order matrices, wherein the plurality of fluid temperature transient reduced basis equations and a plurality of battery temperature transient reduced basis equations are generated by projecting the discretized form of FOM governing equations associated with the transient conjugate heat transfer system and the second reduced subspace, wherein the second reduced subspace corresponding to fluid temperature and battery temperature is computed based on the plurality of input parameters using POD algorithm, wherein the plurality time invariant reduced order matrices are computed based on the second reduced subspace, wherein the plurality of fluid temperature transient reduced basis equations and the plurality of battery temperature transient reduced basis equations are solved separately in a sequential manner by coupling a plurality of boundary conditions associated with an interface of the battery and the fluid based on the fluid mass flux, the input parameters and the second plurality of reduced order matrices

310

compute the fluid temperature field and the battery temperature field associated with the transient conjugate heat transfer system based on the plurality of fluid temperature reduced coefficients and the plurality of battery temperature reduced coefficients, and the second reduced subspace

312

**FIG. 3B**

FIG. 4

**EP 4 567 656 B1**